# EUROPÄISCHE PATENTSCHRIFT

(11) **EP 2 688 774 B1**
(45) Veröffentlichungstag und Bekanntmachung des Hinweises auf die Patenterteilung: **29.07.2015**
(21) Anmeldenummer: 12705062.3
(22) Anmeldetag: 16.02.2012
(51) Int. Cl.: B60R 21/2338, B60R 21/217, F42B 3/00

(54) **BEFESTIGUNGSVORRICHTUNG ZUR LÖSBAREN BEFESTIGUNG EINES ELEMENTS AN EINEM FAHRZEUGFESTEN BAUTEIL**
FASTENING DEVICE FOR DETACHABLY FASTENING AN ELEMENT TO A COMPONENT FIXED TO A VEHICLE
DISPOSITIF DE FIXATION DESTINÉ À FIXER DE MANIÈRE LIBÉRABLE UN ÉLÉMENT SUR UNE PIÈCE FIXÉE À DEMEURE SUR UN VÉHICULE

(30) Priorität: 23.03.2011 DE 102011014869
(43) Veröffentlichungstag der Anmeldung: 29.01.2014
(73) Patentinhaber: Autoliv Development AB, 447 83 Vårgårda (SE)
(72) Erfinder: WEBER, Marcus, 97531 Untertheres (DE)
(74) Vertreter: Schön, Thilo
(86) Internationale Anmeldenummer: PCT/EP2012/000676
(87) Internationale Veröffentlichungsnummer: WO 2012/126553

(56) Entgegenhaltungen:
- DE-A1-102009 005 771
- US-A1- 2006 055 159

## Beschreibung

### Technisches Gebiet der Erfindung

Die Erfindung betrifft eine Befestigungsvorrichtung zur lösbaren Befestigung eines Elements an einem fahrzeugfesten Bauteil nach dem Oberbegriff des Anspruchs 1.

### Stand der Technik

In der WO2007/065709A1 ist eine Befestigungsvorrichtung beschrieben. In der genannten Schrift ist ein Gasgenerator gezeigt, welcher eine fest mit diesem Gasgenerator verbundene Haltevorrichtung trägt, an welcher in einem Ruhezustand ein Verbindungselement starr gehalten ist. Dieses Verbindungselement erstreckt sich von einem ersten Ende zu einem zweiten Ende und innerhalb dieses Verbindungselementes ist eine pyrotechnische Ladung angeordnet, welche bei ihrer Zündung für eine Zerstörung des Verbindungselementes derart sorgt, dass das Verbindungselement in einen ersten Teil, welcher mit der Haltevorrichtung starr verbunden bleibt, und einen zweiten Teil zerbricht. Durch die genannte Zerstörung des Verbindungselementes wird ein Fangband oder Ähnliches freigegeben. Die beschriebene Vorrichtung eignet sich beispielsweise zur Steuerung eines Ventils oder der Tiefe eines Gassack. Hierbei tritt bei der Entfaltung des Gassacks in der Regel eine Zugspannung im Fangband auf.

Um zu verhindern, dass sich der abgesprengte zweite Teil des Verbindungselementes frei bewegen kann, ist ein Rückhaltemittel, beispielsweise in Form eines Seiles vorgesehen. Hierdurch lässt sich der Radius, in welchem sich der abgetrennte zweite Teil des Verbindungselementes bewegen kann, zwar begrenzen, dennoch kann der abgetrennte zweite Teil des Verbindungselementes zur Beschädigung von anderen Bauelementen führen. Dies ist insbesondere deshalb problematisch, da die Geschwindigkeit des abgesprengten zweiten Teils sehr hoch sein kann.

Aus der gattungsbildenden DE 10 2009 005 771 A1 ist eine Befestigungsvorrichtung bekannt, bei der sich das Verbindungselement auch nach Zündung der pyrotechnischen Ladung nicht von der Haltevorrichtung trennen kann. Auch hier zerbricht das Verbindungselment nach Zündung der pyrotechnischen Ladung in zwei Teile, wobei das erste Teil des Verbindungselements starr mit der Haltevorrichtung verbunden bleibt. Um zu erreichen, dass sich das zweite Teil nicht von der Haltevorrichtung trennen kann, weist die Haltevorrichtung ein Lager auf, durch das sich das zweite Teil erstreckt und in welchem es eine begrenzte, axiale Linearbewegung ausführen kann.

### Gegenstand der Erfindung

Hiervon ausgehend stellt sich die vorliegende Erfindung die Aufgabe, eine gattungsgemäße Befestigungsvorrichtung dahingehend weiterzubilden, dass eine Freigabe des im Ruhezustand gehaltenen Elementes nach Zündung der pyrotechnischen Ladung in jedem Fall sichergestellt ist.

Diese Aufgabe wird durch eine Befestigungsvorrichtung mit den Merkmalen des Anspruchs 1 gelöst.

Wie die oben beschriebene Befestigungsvorrichtung des Standes der Technik auch, weist die erfindungsgemäße Befestigungsvorrichtung eine Haltevorrichtung, welche mit einem fahrzeugfesten Bauteil verbunden oder verbindbar ist, und ein sich von einem ersten zu einem zweiten Ende erstreckendes Verbindungselement auf. Hierbei ist das erste Ende dieses Verbindungselementes zumindest in einem ersten Zustand, nämlich dem Ruhezustand, mit einem Befestigungsabschnitt der Haltevorrichtung verbunden, wobei die Verbindung fest und vorzugsweise starr ist. Ebenfalls wie im Stand der Technik, ist eine pyrotechnische Ladung vorgesehen, welche bei Zündung bewirkt, dass zumindest das zweite Ende des Verbindungselementes nicht mehr starr mit dem Befestigungsabschnitt verbunden ist, so dass ein Element, welches mittels des Verbindungselementes gehalten ist, gelöst werden kann. Vorzugsweise erfolgt die Trennung des zweiten Endes des Verbindungselementes vom Befestigungsabschnitt dadurch, dass das Verbindungselement in zwei Teile zerbricht, so dass das erste Ende des Verbindungselementes vom zweiten Ende getrennt wird, wobei das erste Ende mit dem Befestigungsabschnitt verbunden bleibt.

Um ein ungebremstes, freies Entfernen des nach Zündung der pyrotechnischen Ladung vom Befestigungsabschnitt getrennten Abschnittes des Verbindungselementes (dies könnte grundsätzlich auch das gesamte Verbindungselement sein) von der Haltevorrichtung zu verhindern, weist auch diese Haltevorrichtung ein Lager auf, durch welches sich das Verbindungselement mit einem vom ersten Ende axial beabstandeten Abschnitt erstreckt.

Erfindungsgemäß kann der nach Zündung der pyrotechnischen Ladung vom Befestigungsabschnitt getrennte Abschnitt des Verbindungselementes in diesem Lager kippen, um das zuvor gehaltene Element freizugeben. Dieses Element, in der Regel ein Zugelement, beispielsweise in Form eines Fangbandes, steht zum Zeitpunkt der Zündung der pyrotechnischen Ladung in der Regel unter Zugspannung, so dass eine Verkippung des abgetrennten Abschnitts auch stets stattfindet. Hierdurch wird sichergestellt, dass auch ein stark unter Zugspannung stehendes Fangband die Bewegung dieses Abschnitts nicht behindert, sondern sogar noch unterstützt. Aufgrund dieser Verkippung im Lager verliert der abgetrennte Abschnitt praktisch seine gesamte von der Zündung der pyrotechnischen Ladung herrührende Bewegungsenergie und kann deshalb nur noch mit sehr geringer und unbedenklicher Geschwindigkeit aus dem Lager herausfallen.

Um ein starkes Verkippen des abgetrennten Abschnitts zu ermöglichen, ohne Teile des Lagers beweglich ausbilden zu müssen, weist das Lager zwei Lagerflächen auf, welche vom Befestigungsabschnitt in axialer Richtung unterschiedlich beabstandet sind. Hierbei sind die beiden Lagerflächen auf unterschiedlichen Seiten der Umfangsfläche des Verbindungselementes, vorzugsweise starr, angeordnet.

Die Haltevorrichtung kann ein- oder mehrteilig ausgebildet sein, was je nach Anwendungsfall vorteilhaft sein, wie man später mit Bezug auf die beiden Ausführungsbeispiele sehen wird.

Bevorzugte Ausführungsbeispiele ergeben sich aus den Unteransprüchen.

Die Erfindung wird nun anhand von zwei Ausführungsbeispielen mit Bezug auf die Figuren näher erläutert. Hierbei zeigen:

### Kurzbeschreibung der Zeichnungen

- Figur 1: ein erstes Ausführungsbeispiel der Erfindung in einer Schnittdarstellung,
- Figur 2: das in Figur 2 Gezeigte nach Zündung der pyrotechnischen Ladung im Verbindungselement,
- Figur 3: das in Figur 2 Gezeigte nach Freigabe eines zuvor durch das Verbindungselement gehaltenen Fangbandes und
- Figur 4: ein zweites Ausführungsbeispiel der Erfindung in einer perspektivischen Darstellung in einem Ruhezustand, wobei ein Fangband, welches durch das Verbindungselement gehalten ist, nicht dargestellt ist.

### Beschreibung bevorzugter Ausführungsformen

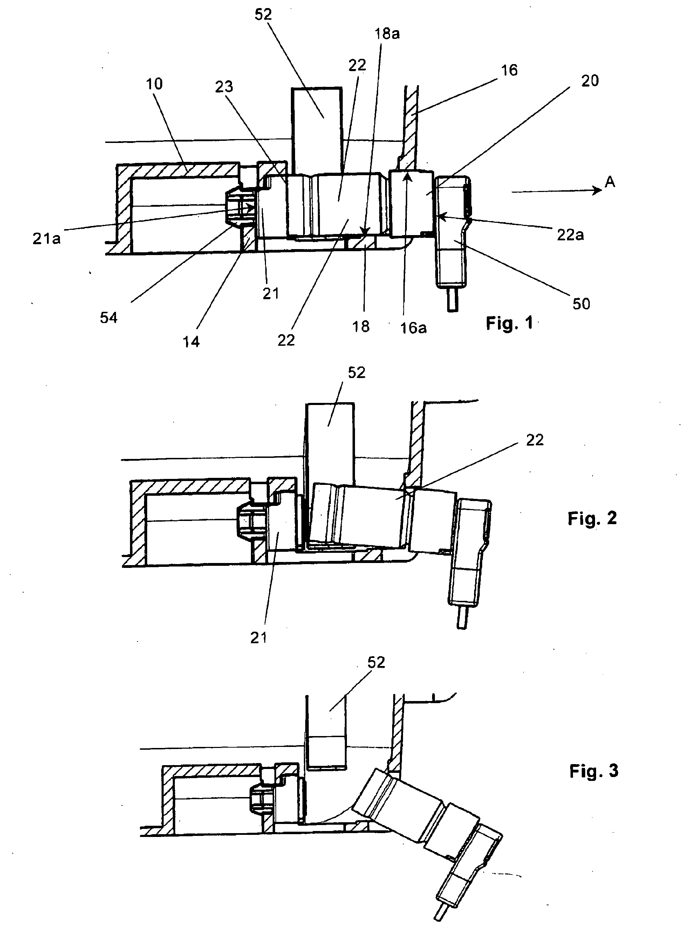

Die Figur 1 zeigt ein erstes Ausführungsbeispiel einer erfindungsgemäßen Befestigungsvorrichtung in einem Ruhezustand. Die Befestigungsvorrichtung weist zwei Grundbestandteile auf, nämlich die schraffiert dargestellte Haltevorrichtung 10, welche Bestandteil eines fahrzeugfesten Bauteils sein kann, oder welche mit einem fahrzeugfestem Bauteil, wie beispielsweise einem Gasgenerator, verbindbar ist, und das von der Haltevorrichtung 10 gehaltene Verbindungselement 20. Die Haltevorrichtung weist hier drei wesentliche Funktionsabschnitte auf, nämlich einen Verschraubungsabschnitt 14, eine erste Strebe 16 mit einer ersten Lagerfläche 16a und eine zweite Strebe 18 mit einer zweiten Lagerfläche 18a. Die beiden Lagerfläche 16a und 18a können vorzugsweise in etwa als halbe Hohlzylinder ausgeführt sein (aufgrund der gewählten Schnittdarstellung nicht zu sehen), wobei die beiden Lagerflächen 16a, 18a im Wesentlichen entgegengesetzt orientiert sind. Weiterhin sind die beiden Lagerflächen 16a und 18a in Axialrichtung A vom Verschraubungsabschnitt 14, welcher den Befestigungsabschnitt der Haltevorrichtung 10 bildet, unterschiedlich beabstandet, nämlich derart, dass die zweite Lagerfläche 18a näher am Verschraubungsabschnitt 14 angeordnet ist, als die erste Lagerfläche 16a.

In der Haltevorrichtung 10 ist das im Wesentlichen zylindrische Verbindungselement 20 gehalten, welches sich in axialer Richtung A von einem ersten Ende 21 a zu einem zweiten Ende 22a erstreckt. Das erste Ende 21 a ist mit dem Verschraubungsabschnitt 14 verschraubt, das zweite Ende 22a ist mit einem Zündstecker 50 verbunden. Es ist eine Sollbruchstelle 23 vorgesehen, welche das Verbindungselement 20 in einen ersten Teil 21 und einen zweiten Teil 22 unterteilt. Im Inneren des Verbindungselementes 20 ist, wie dies beispielsweise in der WO2007/065709A1 beschrieben ist, eine pyrotechnische Ladung vorgesehen, welche bei Zündung den zweiten Teil 22 vom ersten Teil 21 trennt, das Verbindungselement 20 also zerbricht. Der zweite Teil 22, also der vom ersten Ende 21 a axial beabstandete Abschnitt des Verbindungselementes, erstreckt sich durch das durch die beiden Lagerflächen 16a, 18a gebildete Lager.

Ein Fangband 52 ist mittels einer sich um das Verbindungselement 20 erstrekkenden Schlaufe (in der gewählten Darstellung nicht zu sehen) im Ruhezustand mit dem Verbindungselement 20 und somit mit der Befestigungsvorrichtung verbunden. Das Fangband 52 erstreckt sich, wie dies in Figur 1 gezeigt ist, von der zweiten Lagerfläche 18a, also von der Lagerfläche, welche sich in axialer Richtung näher am Verschraubungsabschnitt befindet, weg.

Wird nun, wie dies in Figur 2 gezeigt ist, die pyrotechnische Ladung gezündet, so zerbricht das Verbindungselement 20 in den ersten Teil 21 und den zweiten Teil 22, wobei der erste Teil starr mit der Haltevorrichtung 10 verbunden bleibt. Gleichzeitig zieht das Fangband 52, welches in der Regel unter Zugspannung steht, am abgetrennten zweiten Teil 22, also an dem Abschnitt des Verbindungselementes, welcher sich durch das Lager erstreckt, und zwingt diesen zu einer kombinierten Axial- und Kippbewegung, wie sie in Figur 2 gezeigt ist, wodurch das Fangband 52 (oder ein entsprechendes anderes Element) freigegeben wird. Durch das Verkippen gibt der abgetrennte zweite Teil 22 jedoch praktisch seine gesamte kinetische Energie ab und kann dann nur noch, wie dies in Figur 3 gezeigt ist, beispielsweise aufgrund der Schwerkraft aus dem Lager herausfallen. Somit ist da erfindungsgemäße Ziel erreicht.

Das zweite Teil 22 des Verbindungselementes 20 kann sich nur dann von der Haltevorrichtung 10 trennen, wenn es sich exakt in axialer Richtung bewegt, was aufgrund der Krafteinleitung durch das Fangband 52 jedoch nicht passiert und auch ohne äußere Krafteinleitung aufgrund der asymmetrischen Gestaltung des Lagers nicht passieren würde.

Die Montage des Verbindungselementes 20 erfolgt durch exakt axiale Zuführung in die Haltevorrichtung und anschließendes Verschrauben des ersten Endes 21 a mittels der Schraube 54.

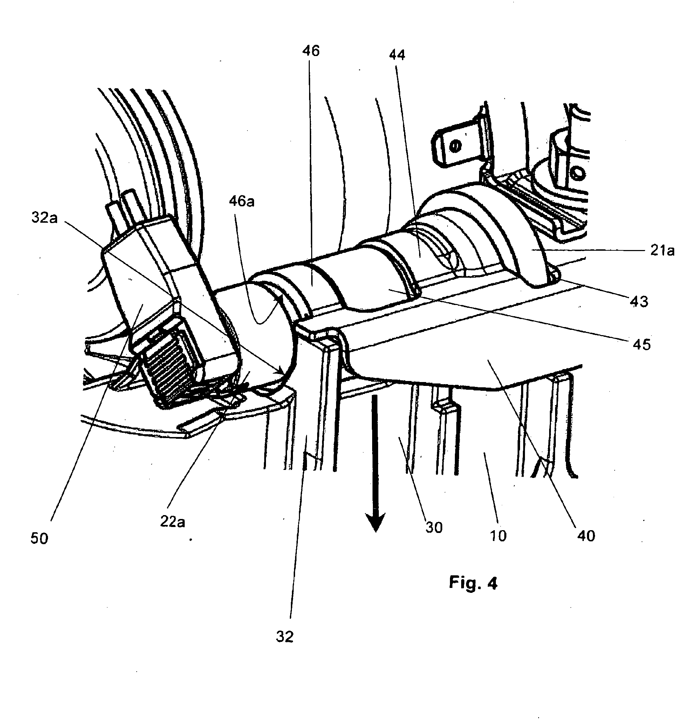

Die Figur 4 zeigt ein zweites Ausführungsbeispiel, dessen grundsätzliche Funktionsweise sehr ähnlich zu der des ersten Ausführungsbeispiels ist. Der Hauptunterschied ist hier, dass die Haltevorrichtung 10 zweiteilig, nämlich mit einem ersten Element 30 und einem zweiten Element 40 ist. Hierbei ist das zweite Element 40 in Form eines Abdeckelementes, insbesondere in Form eines Abdeckbleches, ausgebildet. Erstes Element 30 und zweites Element 40 sind fest miteinander verbunden und das Verbindungselement 20 ist zwischen dem ersten Element 30 und dem zweiten Element 20 aufgenommen. Das erste Ende 21a des Verbindungselementes 20 ist hier gegenüber dem Rest des Verbindungselementes 20 verdickt und erstreckt sich durch einen Schlitz 43 des zweiten Elementes 40. Das erste Element 30 kann eine entsprechende Nut aufweisen, welche aufgrund der Darstellung nicht zu sehen ist. Der Schlitz 43 und gegebenenfalls die Nut bilden hier den Befestigungsabschnitt der Haltevorrichtung 10 Aufgrund der Formgebungen ist das Verbindungselement 20 in der zweiteiligen Haltevorrichtung 10 gehalten, so dass ein Verschrauben oder dergleichen nicht notwendig ist.

Die erste Lagerfläche 32a ist hier dem ersten Element 30 und die zweite Lagerfläche 46a ist hier dem zweiten Element 40 zugeordnet. Hierzu weist das zweite Element 40 zwei umgreifende Abschnitte 44, 46 auf, welche jeweils etwa die Hälfte des Umfangs des Verbindungselement 20 umgreifen. Die zweite Lagerfläche 46a ist hierbei die Innenseite des zweiten umgreifenden Abschnitts 46. Zwischen den beiden umgreifenden Abschnitten 44, 46 besteht ein Freiraum 45 zur Anordnung einer Schlaufe eines sich um das Verbindungselement 20 erstrekkenden Fangbandes oder eines ähnlichen Elementes. Die Erstreckungsrichtung des Fangbandes ist in Figur 4 mittels des Pfeils angedeutet, das Fangband selbst ist nicht dargestellt.

Die Montage ist hier etwas anders als im ersten Ausführungsbeispiel, hier wird nämlich zunächst das Verbindungselement 20 am ersten Element 30 angeordnet und anschließend wird das zweite Element 40 mit dem ersten Element 30 verbunden, so dass das Verbindungselement 20 zwischen erstem und zweitem Element gehalten ist. Die Funktionsweise und Kinematik ist wie im ersten Ausführungsbeispiel, so dass hierauf nicht gesondert eingegangen werden muss.

### Bezugszeichenliste

- 10: Haltevorrichtung
- 14: Verschraubungsabschnitt
- 16: erste Strebe
- 16a: erste Lagerfläche
- 18: zweite Strebe
- 18a: zweite Lagerfläche
- 20: Verbindungselement
- 21: erster Teil
- 21a: erstes Ende
- 22: zweiter Teil
- 22a: zweites Ende
- 23: Sollbruchstelle
- 30: erstes Element
- 32: Strebe
- 32a: erste Lagerfläche
- 40: zweites Element
- 43: Schlitz
- 44: erster umgreifender Abschnitt
- 45: Freiraum
- 46: zweiter umgreifender Abschnitt
- 46a: zweite Lagerfläche
- 50: Zündstecker
- 52: Fangband
- 54: Schraube

## Patentansprüche

1. Befestigungsvorrichtung zur lösbaren Befestigung eines Elements an einem fahrzeugfesten Bauteil,
mit einer mit einem fahrzeugfesten Bauteil verbundenen oder verbindbaren Haltevorrichtung (10), einem sich von einem ersten (21 a) zu einem zweiten Ende (22a) in axialer Richtung (A) erstreckenden Verbindungselement (20), welches in einem ersten Zustand über sein erstes Ende (21 a) mit einem Befestigungsabschnitt der Haltevorrichtung (10) verbunden ist, und einer pyrotechnischen Ladung, welche bei Zündung bewirkt, dass zumindest das zweite Ende (22a) des Verbindungselements (20) nicht mehr starr mit dem Befestigungsabschnitt verbunden ist,
wobei die Haltevorrichtung (10) ein Lager aufweist, durch welches sich das Verbindungselement (20) mit einem vom ersten Ende (21 a) axial beabstandeten Abschnitt erstreckt,
**dadurch gekennzeichnet, dass** das Lager wenigstens zwei Lagerflächen (16a, 18a) aufweist, wobei die beiden Lagerflächen von dem Befestigungsabschnitt in Axialrichtung unterschiedlich beabstandet und auf unterschiedlichen Seiten der Umfangsfläche des Verbindungselementes angeordnet sind, so dass der nach Zündung der pyrotechnischen Ladung vom Befestigungsabschnitt der Haltevorrichtung (10) getrennte Abschnitt dies Verbindungselementes (20) in diesem Lager kippen kann.

2. Befestigungsvorrichtung nach Anspruch 1, **dadurch gekennzeichnet, dass** die pyrotechnische Ladung innerhalb des Verbindungselementes derart angeordnet ist, dass dieses bei Zündung der pyrotechnischen Ladung in zwei Teile zerbricht.

3. Befestigungsvorrichtung nach Anspruch 2, **dadurch gekennzeichnet, dass** das erste Ende des Verbindungselementes auch nach Zündung der pyrotechnischen Ladung mit dem Befestigungsabschnitt verbunden bleibt.

4. Befestigungsvorrichtung nach Anspruch 3, **dadurch gekennzeichnet, dass** die Verbindung zwischen erstem Ende und dem Befestigungsabschnitt starr ist.

5. Befestigungsvorrichtung nach einem der vorangehenden Ansprüche, **dadurch gekennzeichnet, dass** die beiden Lagerflächen zu unterschiedlichen Elementen gehören, welche bei der Montage der Haltevorrichtung starr miteinander verbunden werden.

6. Befestigungsvorrichtung nach Anspruch 5, **dadurch gekennzeichnet, dass** der Befestigungsabschnitt aus den beiden Elementen derart aufgebaut ist, dass das erste Ende des Verbindungselements zwischen den beiden Elementen gehalten ist.

7. Befestigungsvorrichtung nach einem der Ansprüche 1 bis 4, **dadurch gekennzeichnet, dass** die beiden Lagerflächen zu einem einzigen Element der Haltevorrichtung gehören.

8. Befestigungsvorrichtung nach Anspruch 7, **dadurch gekennzeichnet, dass** das erste Ende des Verbindungselementes mit dem Befestigungsabschnitt der Haltevorrichtung verschraubt oder vernietet ist.

## Claims

1. An attachment device for releasable attachment of an element to a component fixed with respect to the vehicle,
including a retaining device (10) connected or connectable to a component fixed with respect to the vehicle, a connecting element (20) extending in the axial direction (A) from a first (21 a) to a second end (22a), which in a first state is connected via its first end (21 a) to an attachment section of the retaining device (10), and a pyrotechnic charge which upon ignition causes at least the second end (22a) of the connecting element (20) to no longer be rigidly connected to the attachment section,
wherein the retaining device (10) includes a bearing through which the connecting element (20) extends with a section axially spaced from the first end (21 a), **characterised in that** the bearing includes at least two bearing surfaces (16a, 18a), wherein the two bearing surfaces are spaced differently in the axial direction from the attachment section and are disposed on different sides of the circumferential surface of the connecting element, so the section of the connecting element (20), which section is separated from the attachment section of the retaining device (10) after ignition of the pyrotechnic charge, can tilt in this bearing.

2. The attachment device according to claim 1, **characterised in that** the pyrotechnic charge is disposed within the connecting element such that it breaks into two parts upon ignition of the pyrotechnic charge.

3. The attachment device according to claim 2, **characterised in that** the first end of the connecting element remains connected to the attachment section even after ignition of the pyrotechnic charge.

4. The attachment device according to claim 3, **characterised in that** the connection between the first end and the attachment section is rigid.

5. The attachment device according to one of the preceding claims, **characterised in that** the two bearing surfaces belong to different elements, which are rigidly connected to each other during the installation of the retaining device.

6. The attachment device according to claim 5, **characterised in that** the attachment section is built from the two elements such that the first end of the connecting element is held between the two elements.

7. The attachment device according to one of claims 1 to 4, **characterised in that** the two bearing surfaces belong to a single element of the retaining device.

8. The attachment device according to claim 7, **characterised in that** the first end of the connecting element is screwed or riveted to the attachment section of the retaining device.

## Revendications

1. Dispositif de fixation destiné à fixer de manière libérable un élément sur une pièce fixée à demeure sur un véhicule,
comprenant un dispositif de retenue (10) qui est ou peut être relié à une pièce fixée à demeure sur un véhicule, un élément de liaison (20) s'étendant d'une première (21 a) à une seconde extrémité (22a) dans la direction axiale (A), qui est relié dans un premier état à une partie de fixation du dispositif de retenue (10) par le biais de sa première extrémité (21 a), et une charge pyrotechnique, qui, lors de l'allumage, a pour effet qu'au moins la seconde extrémité (22a) de l'élément de liaison (20) n'est plus reliée fixement à la partie de fixation,
le dispositif de retenue (10) comportant un support à travers lequel l'élément de liaison (20) s'étend avec une partie espacée axialement de la première extrémité (21 a),
**caractérisé en ce que** le support comporte au moins deux surfaces d'appui (16a, 18a), les deux surfaces d'appui étant disposées à des distances différentes de la partie de fixation dans la direction axiale et sur des côtés différents de la surface circonférentielle de l'élément de liaison, de sorte que la partie de l'élément de liaison (20) séparée de la partie de fixation du dispositif de retenue (10) après l'allumage de la charge pyrotechnique peut basculer dans ce support.

2. Dispositif de fixation selon la revendication 1, **caractérisé en ce que** la charge pyrotechnique est disposée dans l'élément de liaison de telle manière que celui-ci se brise en deux morceaux lors de l'allumage de la charge pyrotechnique.

3. Dispositif de fixation selon la revendication 2, **caractérisé en ce que** la première extrémité de l'élément de liaison reste reliée à la partie de fixation même après allumage de la charge pyrotechnique.

4. Dispositif de fixation selon la revendication 3, **caractérisé en ce que** la liaison entre la première extrémité et la partie de fixation est fixe.

5. Dispositif de fixation selon l'une des revendications précédentes, **caractérisé en ce que** les deux surfaces d'appui appartiennent à des éléments différents, qui sont reliés fixement l'un à l'autre lors du montage du dispositif de retenue.

6. Dispositif de fixation selon la revendication 5, **caractérisé en ce que** la partie de fixation est constituée des deux éléments de telle manière que la première extrémité de l'élément de liaison est maintenue entre les deux éléments.

7. Dispositif de fixation selon l'une des revendications 1 à 4, **caractérisé en ce que** les deux surfaces d'appui appartiennent à un seul élément du dispositif de retenue.

8. Dispositif de fixation selon la revendication 7, **caractérisé en ce que** la première extrémité de l'élément de liaison est vissée ou rivetée avec la partie de fixation du dispositif de retenue.
